# EUROPÄISCHE PATENTSCHRIFT

(11) **EP 3 168 082 B1**
(45) Veröffentlichungstag und Bekanntmachung des Hinweises auf die Patenterteilung: **16.10.2019**
(21) Anmeldenummer: 16197934.9
(22) Anmeldetag: 09.11.2016
(51) Int. Cl.: B60R 1/00

(54) **GLASEINHEIT FÜR EIN INDIREKTES SICHTSYSTEM FÜR EIN FAHRZEUG**
GLASS UNIT FOR AN INDIRECT VISION SYSTEM FOR A VEHICLE
ENSEMBLE DE VITRE POUR UN SYSTÈME DE VISION INDIRECT POUR UN VÉHICULE

(30) Priorität: 13.11.2015 DE 102015222426; 01.02.2016 DE 102016201500
(43) Veröffentlichungstag der Anmeldung: 17.05.2017
(73) Patentinhaber: MEKRA LANG GmbH & Co. KG, 91465 Ergersheim (DE)
(72) Erfinder: Lang, Werner Dr., 91465 Ergersheim (DE); Felbinger, Willi, 91478 Markt Nordheim (DE)
(74) Vertreter: Winter, Brandl, Fürniss, Hübner, Röss, Kaiser, Polte - Partnerschaft mbB

(56) Entgegenhaltungen:
- GB-A- 2 250 250
- US-A1- 2014 126 232

## Beschreibung

Die Erfindung betrifft eine Glaseinheit für ein indirektes Sichtsystem für ein Fahrzeug gemäß Anspruch 1.

Glaseinheiten für indirekte Sichtsysteme insbesondere für Spiegel bestehen aus dem Spiegelglas, das auf Glasträgerteil montiert ist. Das Glasträgerteil trägt und schützt das Spiegelglas. Zusätzlich weist das Glasträgerteil Verbindungselemente zur Verbindung der Glaseinheit mit den übrigen Komponenten eines indirekten Sichtsystems auf. Üblicherweise werden das Spiegelglas und das Glasträgerteil miteinander verklebt. D. h., es muss zunächst das Spiegelglas und das Glasträgerteil und zusätzlich noch Anbauteile für die Verbindung der Glaseinheit mit dem Spiegelsystem hergestellt werden. Anschließend müssen diese Komponenten montiert werden. Hierbei gibt es je nach Konzept mehrere Einzelkomponenten, die hergestellt, zwischengelagert und montiert werden müssen, wodurch unnötige Kosten entstehen.

GB 2250250A offenbart einen Außenspiegel für ein Fahrzeug, an dem zur Karosserie hin zur Erfassung des toten Winkels ein zusätzlicher Spiegel angebracht ist, befestigt mit selbstklebendem Material.

Ausgehend von einer solchen herkömmlichen Glaseinheit bzw. von GB 2250250A ist es Aufgabe der vorliegenden Erfindung, eine Glaseinheit für ein indirektes Sichtsystem für ein Fahrzeug bereitzustellen, welches kostengünstig als Einheit herstellbar ist.

Die Lösung dieser Aufgabe erfolgt durch die Merkmale des Anspruchs 1.

Dadurch, dass die Glaseinheit als Verbundbauteil aus drei Komponenten aufgebaut ist, wobei die zweite Komponente selbsthaftende Eigenschaften hat, wird die vollständige Glaseinheit als vorgefertigtes Halbzeug bereitgestellt, so dass sich die Montagezeit eines Spiegelsystems oder eines Kamerasystems mit einer solchen Glaseinheit verringert. In Unterschied zu herkömmlichen Glaseinheiten ist hierbei die selbsthaftende Komponente kein Kleber, sondern ein von außen sichtbares Element des Glasträgerteils. Die zweite Komponente umschließt die erste Komponente ringförmig geschlossen oder ringförmig mit Unterbrechungen. Die zweite Komponente ist damit struktureller Bestandteil des Glasträgerteils und der gesamten Glaseinheit und gleichzeitig erfüllt es die Funktion des Klebers bei herkömmlichen Glaseinheiten. Das Glasträgerteil umfasst somit ein erstes und ein zweites Trägerteil, nämlich die zweite und dritte Komponente, die zusammen mit ersten Komponente aus Glas. Durch die Materialien für die zweite und dritte Komponente werden Vibrationen durch die erfindungsgemäße Glaseinheit gedämpft.

Durch die vorteilhafte Ausgestaltung der Erfindung nach Anspruch 2 wird die bruchempfindliche Glaseinheit optimal geschützt und zusätzlich ergibt sich dadurch eine kompakte Bauform. Die Umschließung oder Umfassung der ersten Komponente durch die dritte Komponente ist ringförmig geschlossen oder ringförmig mit Unterbrechungen, so dass nur einzelne Segmente die erste Komponente umschließen.

Durch die vorteilhafte Ausgestaltung der Erfindung nach Anspruch 3 erhöht sich der Zusammenhalt der drei Komponenten und es ergibt sich eine stabilere Glaseinheit.

Durch die vorteilhaften Ausgestaltungen der Erfindung nach Anspruch 4, 5 und 6 haben geeignete Materialen für die zweite und dritte Komponente der erfindungsgemäßen Glaseinheit zum Inhalt.

Durch die Materialien für die zweite und dritte Komponente nach Anspruch 7 werden Vibrationen durch die erfindungsgemäße Glaseinheit gedämpft.

Durch die vorteilhafte Ausgestaltung der Erfindung nach Anspruch 8 umfasst die dritte Komponente angeformte Montageelemente zum Verbinden der fertigen Glaseinheiten mit einem Spiegelsystem oder allgemein einem System für indirekte Sicht. Durch die Anformung wird zum Ausdruck gebracht, dass die Montageelemente mit zusammen mit der dritten Komponente hergestellt werden.

Durch die vorteilhafte Ausgestaltung der Erfindung nach Anspruch 9 erfüllt das Glasträgerteil durch die zweite Komponente die Erfordernisse eines Splitterschutzes für die erste Komponente aus Glas.

Durch das L-förmige Übergreifen und das U-förmige Umgreifen der ersten Komponente durch die zweite Komponente nach Anspruch 10 wird zum einen der Halt der ersten Komponente aus Glas in dem Trägerteil erhöht und zum anderen werden die vibrationsdämpfenden Eigenschaften der erfindungsgemäßen Glaseinheit erhöht.

Durch die vorteilhafte Ausgestaltung nach Anspruch 11 wird ein Puffer bereitgestellt, der ein Klappern der in ein Sichtsystem eingebauten Glaseinheit verhindert.

Vorzugsweise wird die Glaseinheit mittels eines Montagespritzgussprozesses in einem Verfahrensschritt hergestellt - Anspruch 12.

Bei der Glaseinheit gemäß der vorliegenden Erfindung kann es sich bei der ersten Komponente sowohl um ein Spiegelglas eines herkömmlichen Spiegels - Anspruch 13 - oder um eine optische Linse - Anspruch 14, z. B. eines Kamerasystems oder um ein Abdeckglas - Anspruch 15 - für eine optische Einrichtung, z. B. einer Kamera handeln.

Weitere Einzelheiten, Merkmale und Vorteile der Erfindung ergeben sich aus der nachfolgenden Beschreibung bevorzugter Ausführungsformen.

Es zeigt:
Fig. 1 eine erste Ausführungsform der Erfindung,
Fig. 2 eine zweite Ausführungsform der Erfindung,
Fig. 3 eine dritte Ausführungsform der Erfindung,
Fig. 4 eine vierte Ausführungsform der Erfindung,
Fig. 5 eine fünfte Ausführungsform der Erfindung,
Fig. 6 eine sechste Ausführungsform der Erfindung,
Fig. 7 eine siebte Ausführungsform der Erfindung,
Fig. 8 eine Aufsicht auf die Ausführungsformen nach Fig. 1, 2 oder 3,
Fig. 9 eine Aufsicht auf die Ausführungsform nach Fig. 5,
Fig. 10a eine Aufsicht auf eine achte Ausführungsform der Erfindung,
Fig. 10b eine Schnittdarstellung achten Ausführungsform,
Fig. 11 eine Anwendung der vierten Ausführungsform in einer Sonnenblende mit Kosmetikspiegel für Kfz, und
Fig.12 eine neunte Ausführungsform der Erfindung in Form einer Abdeckung einer Kameraoptik.

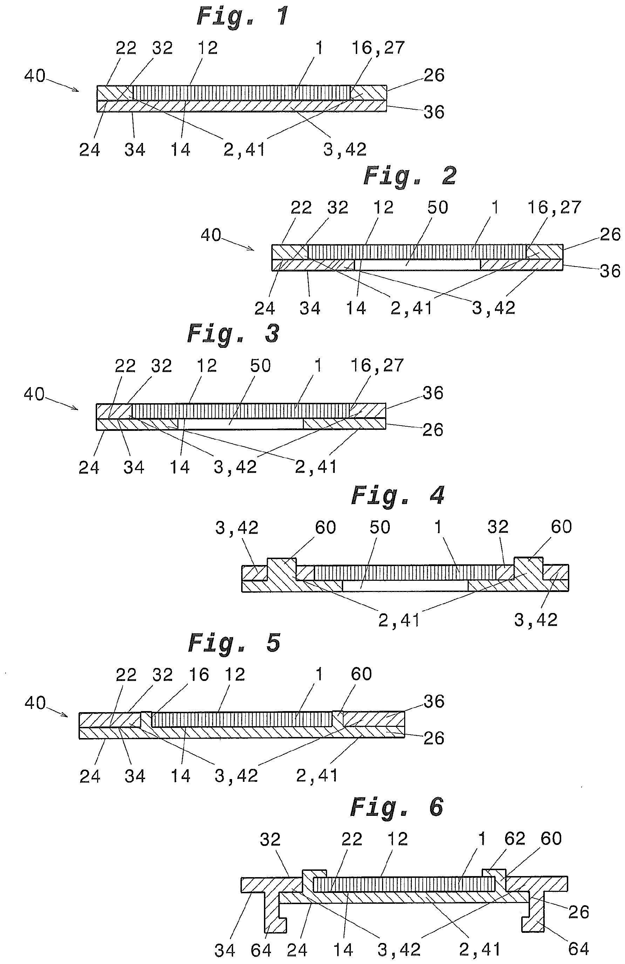

Fig. 1 zeigt eine erste Ausführungsform der Erfindung mit einer ersten Komponente 1 aus Glas in Form eines Spiegelglases. Das Spiegelglas weist eine Vorderseite 12, eine Rückseite 14 und schmale Randseiten 16 auf. Auf der nach außen gewandten Vorderseite 12 ist das Spiegelbild zu sehen. Die schmalen Randseiten 16 sind von einer zweiten selbsthaftenden Komponente 2 vollständig umgeben. Die zweite ringförmig ausgebildete Komponente 2 weist eine Vorderseite 22, eine Rückseite 24, schmale äußere Randseiten 26 und schmale innere Randseiten 27 auf. Die Dicke der ersten Komponente 1 ist gleich der Dicke der zweiten Komponente 2, so dass die Vorderseite 16 des Spiegelglases 1 mit der Vorderseite 26 der zweiten Komponente eine ebene Fläche bilden. Die zweite Komponente 2 bzw. Das erste Trägerelement 41 umschließt die erste Komponente 1 ringförmig. Die scheibenförmige Verbundstruktur aus der ersten und zweiten Komponente 1, 2 kontaktiert mit den Rückseiten 14, 24 eine dritte Komponente 3, die eine Vorderseite 32, eine Rückseite 34 und schmale Randseiten 36 aufweist. Die Fläche der Vorderseite 32 der dritten Komponente 3 ist gleich der Summe der Fläche der Rückseiten 14, 24 der ersten und zweiten Komponente 2 und 3, so dass die Randseiten 36 der dritten Komponente 3 bündig mit den äußeren Randseiten 26 der zweiten Komponente 2 abschließt und die dritte Komponente 3 die erste und zweite Komponente 1, 2 vollständig überdeckt. Im Vergleich zu einer herkömmlichen Glaseinheit bilden daher die zweite und dritte Komponente 2, 3 ein Glasträgerteil 40 mit der zweiten Komponente 2 als erstes Trägerelement 41 und der dritten Komponente 3 als zweites Trägerelement 42.

Die zweite Komponente 2 besitzt eine selbsthaftende Eigenschaft und erfüllt daher neben der Funktion als erstes Trägerelement 41 auch die Funktion eines Klebers, der die erste, zweite und dritte Komponente 1, 2, 3 zu einer Einheit verbindet, in der die erste Komponente 1 aus Glas sicher durch das Glasträgerteil 40 gehalten wird.

Die zweite Komponente 2 besteht aus einem weicheren Material als die dritte Komponente 3. Auch ist der E-Modul der dritten Komponente 3 erheblich größer als der E-Modul der zweiten Komponente. Hierdurch weist die Glaseinheit vibrationsdämpfende Eigenschaften auf, so dass das Spiegelbild in einem Spiegelsystem mit einer solchen Glaseinheit besser zu erkennen ist. Als Material für die zweite Komponente 2 eignen sich Thermoplaste, insbesondere Elastomere, Gummi oder Silikon. Als Material für die dritte Komponente 3 eignen sich Thermoplaste oder Metall. Die genannten Materialeigenschaften und Materialien gelten auch für die nachfolgenden Ausführungsformen.

Fig. 2 zeigt eine zweite Ausführungsform der Erfindung, die sich von der ersten Ausführungsform nach Fig. 1 lediglich dadurch unterscheidet, dass die dritte Komponente 3 eine zentrale Ausnehmung 50 aufweist, durch die die Rückseite 14 der ersten Komponente 1 aus Glas sichtbar ist. Diese Ausführungsform zeichnet sich durch ein geringeres Gewicht aus.

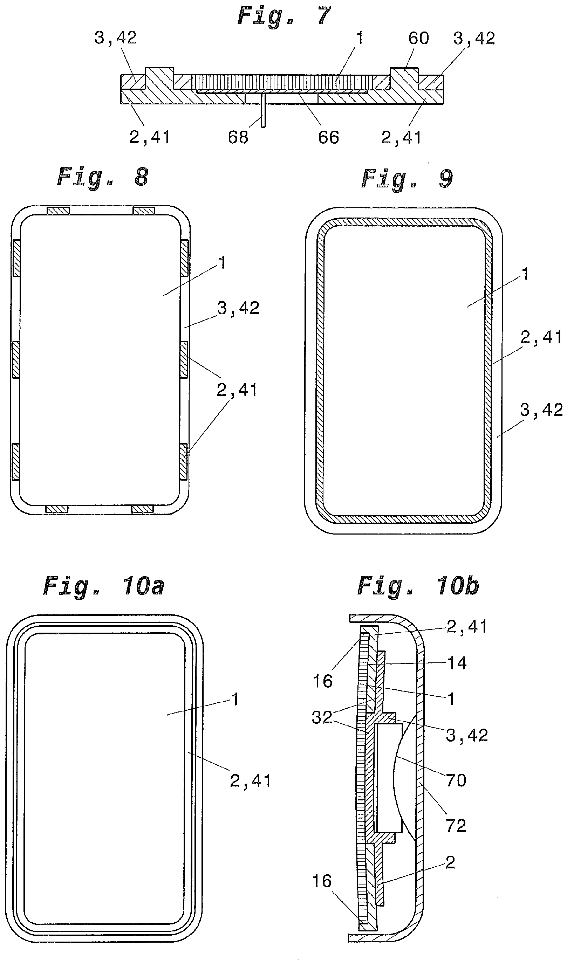

Die zweite Komponente 2 bzw. das selbsthaftende erste Trägerelement 41 umschließt die erste Komponente 1 ringförmig entweder vollständig oder mit Unterbrechungen oder segmentförmig, wie dies in Fig. 8 dargestellt ist.

Fig. 3 zeigt eine dritte Ausführungsform der Erfindung, die sich von der zweiten Ausführungsform dadurch unterscheidet, dass die Position, die Form und Anordnung der zweiten und dritten Komponente 2, 3 vertauscht sind. Auch diese Ausführungsform zeichnet sich im Vergleich zur ersten Ausführungsform durch ein geringeres Gewicht aus. Die dritte Komponente 3 bzw. das zweite Trägerelement 42 umschließt die erste Komponente 1 ringförmig entweder vollständig oder sie ist segmentförmig ausgebildet, wie dies in Fig. 8 dargestellt ist.

Fig. 4 zeigt eine vierte Ausführungsform der Erfindung, die eine Modifikation der dritten Ausführung nach Fig. 3 darstellt. Hierbei weist die zweite Komponente 2 auf ihrer Vorderseite 22 einen ringförmigen oder mehrere segmentförmige Fortsätze 60 auf, die die dritte Komponente 3 vollständig durchsetzen und leicht über die Vorderseite 32 der dritten Komponente 3 hinausragen. Diese Fortsätze 60 als Teil der zweiten Komponente 2 aus weicherem Material dienen als Puffer und verhindern Klappern der in ein Sichtsystem eingebauten Glaseinheit aufgrund von Vibrationen. Zusätzlich ergibt sich eine weiter verbesserte Vibrationsdämpfung und durch die überstehenden Fortsätze 60 wird die erste Komponente 1 aus Glas zusätzlich geschützt.

Fig. 5 zeigt eine fünfte Ausführungsform der Erfindung, die als Modifikation der vierten Ausführungsform nach Fig. 4 betrachtet werden kann. Im Unterschied zur vierten Ausführungsform nach Fig. 4 weist die zweite Komponente 2 im Bereich der ersten Komponente 1 keine Ausnehmung auf und die Rückseiten 14, 34 der ersten und dritten Komponente 1, 3 werden vollständig von der zweiten Komponente 2 überdeckt. Weiter durchsetzen der ringförmig Fortsatz 60 bzw. die ringförmigen Fortsätze 60 - Segmente - nicht die dritte Komponente 3, sondern erstrecken sich zwischen der dritten und ersten Komponente 3, 1 entlang der Randseiten 16 der ersten Komponente 1. Auch sind die Fortsätze 60 in der fünften Ausführungsform schmäler ausgebildet als in der vierten Ausführungsform. Auch stehen die Fortsätze 60 nur unwesentlich über die Vorderseiten 12 und 32 hervor, um eine Abschattung der Spiegelfläche zu vermeiden.

Fig. 7 zeigt eine siebte Ausführungsform der Erfindung, die sich von der vierten Ausführungsform nach Fig. 4 lediglich dadurch unterscheidet, dass auf der Rückseite 14 der ersten Komponente 1 eine elektrische Heizfolie 66 mit elektrischen Anschlüssen 68 vorgesehen ist. Die elektrischen Anschlüsse 68 werden über die Ausnehmung 50 in der zweiten Komponente zugeführt.

Fig. 6 zeigt eine sechste Ausführungsform der Erfindung, die als Modifikation der fünften Ausführungsform aufgefasst werden kann. Im Unterschied zur Ausführungsform nach Fig. 5 umgreifen der ringförmige Fortsatz 60 oder die Mehrzahl von Fortsätzen 60 die Randseiten 16 der ersten Komponente 1 vollständig oder abschnittsweise. Ein übergreifender Teil 62 der Fortsätze 60 wirkt wie bei der vierten Ausführungsform nach Fig. 4 wieder als Puffer und verhindert Klappern. Die ringförmige dritte Komponente 3 überlappt mit der zweiten Komponente 2 und erstreckt sich seitlich über die zweite Komponente 2 hinaus. Auf der Rückseite 34 der dritten Komponente 3 sind einstückig Montageelemente 64 angeformt, die sich entlang der Randseiten 26 der zweiten Komponente 2 nach hinten erstrecken. Durch die Montageelemente 64, z. B. in Form von Schnapphaken oder Schraubdornen, erfolgt die Verbindung der Glaseinheit mit den übrigen Komponenten eines Sichtsystems.

Bei den Ausführungsformen nach Fig. 5 und 6 umschließt die zweite Komponente bzw. das selbsthaftende erste Trägerelement 41 die erste Komponente 1 vollständig ringförmig, wie dies in Fig. 9 dargestellt ist oder sie durchsetzt segmentförmig die dritte Komponente 3 bzw. das zweite Trägerelement 42; analog zu der Ausgestaltung nach Fig. 8.

Figuren 10a und 10b zeigen eine achte Ausführungsform der Erfindung in Aufsicht und Schnittdarstellung, wobei die Glaseinheit in einen Glasversteller-Spiegelkopf eingebaut ist. Die achte Ausführungsform der Glaseinheit nach Fig. 10a und 10b umfasst eine erste Komponente 1 aus Glas in Form eines Spiegelglases. Das Spiegelglas weist eine Vorderseite 12, eine Rückseite 14 und schmale Randseiten 16 auf. Auf der nach außen gewandten Vorderseite 12 ist das Spiegelbild zu sehen. Die schmalen Randseiten 16 sind von einer zweiten selbsthaftenden Komponente 2 vollständig umgeben. Die zweite ringförmig ausgebildete Komponente 2 mit einem L-förmigen Querschnitt -siehe Fig. 10b - umgreift die schmale Randseite 16 der ersten Komponente 1 und erstreckt auf der Rückseite 14 der ersten Komponente 1 ein Stück nach Innen. Im mittleren Teil der Rückseite 14 der ersten Komponente 1 bildet die zweite Komponente 2 eine Ausnehmung 50. Eine dritte Komponente 3 mit einer Vorderseite 32 und einer Rückseite 34 füllt die Ausnehmung 50 aus, erstreckt sich über die Ausnehmung 50 hinaus und überdeckt einen Teil der zweiten Komponente 2. Die selbsthaftende zweite Komponente 2 bildet ein erstes Trägerelement 41 und die dritte Komponente 3 bildet ein zweites Trägerelement 42. Die beiden Trägerelemente bilden zusammen mit der ersten Komponente 1 aus Glas eine Glaseinheit. Im Bereich der Ausnehmung 50 umfasst die Rückseite 34 der dritten Komponente 3 eine becherförmige Aufnahme für eine Glasverstelleinheit 70. Die Glasverstelleinheit 70 ist zusammen mit der Glaseinheit 1, 2, 3 in bekannter Weise in einem Spiegelgehäuse 72 angeordnet.

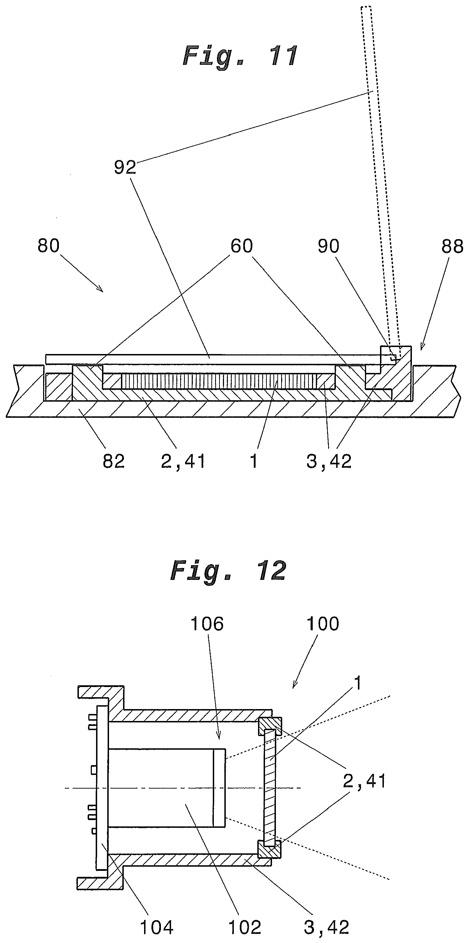

Fig. 11 zeigt eine Sonnenblende mit Kosmetikspiegel für ein Kfz. Der Kosmetikspiegel umfasst eine Glaseinheit 80 gemäß der vierten Ausführungsform der Erfindung nach Fig. 4. Die Sonnenblende umfasst einen Sonnenblenden-Hauptkörper 82 mit einer der Sonne zugewandten Vorderseite 84 und einer dem Fahrer zugewandten Rückseite 86. Die Glaseinheit 80 ist in einer Vertiefung 88 in der Rückseite 86 des Sonnenblenden-Hauptkörpers 82 angeordnet. Der außen liegende Teil der dritten Komponente 3 ist auf einer Seite vergrößert und trägt ein gefedertes Scharnier 90 für einen Spiegeldeckel 92. Der Spiegeldeckel 92 wird durch die über die Vorderseite 12 der ersten Komponente 1 überstehenden Fortsätze 60 der zweiten Komponente 2 abgestützt. Die zweite Komponente 2 besteht aus Gummi oder einem anderen elastischen Material, so dass die Fortsätze 60 als Puffer für den Spiegeldeckel 92 wirken.

Fig. 12 zeigt eine neunte Ausführungsform der Erfindung in Form einer Abdeckung 100 einer Kameraoptik 102. Die säulenförmige Kameraoptik 102 erstreckt sich von einer Leiterplatte 104 weg und weist mit einem freien Ende 106 in Richtung abzubildendem Objekt. Die ebenfalls säulenförmige Abdeckung 100 umschließt und schützt die Kameraoptik 102. Die Abdeckung 100 umfasst eine erste Komponente 1 in Form einer durchsichtigen Platte aus Glas oder Kunststoff, die vor dem freien Ende 106 der Kameraoptik 102 angeordnet ist. Die plattenförmige erste Komponente 1 wird von einer ringförmigen zweiten Komponente 2 umgriffen, wobei die zweite Komponente einen U-förmigen Querschnitt aufweist, so dass die zweite Komponente 2 die erste Komponente an drei Seiten kontaktiert. Eine rohrförmige dritte Komponente 3 ist mit einem Ende an der Leiterplatte 104 befestigt und das andere Ende wird durch erste und zweite Komponente 1, 2 abgeschlossen. Die zweite Komponente 2 ist selbsthaftend und verbindet damit die erste Komponente 1 mit der dritten Komponente 3 zu der Abdeckung 100.

### Bezugszeichenliste:

- 1: erste Komponente aus Glas
- 12: Vorderseite von 1
- 14: Rückseite von 1
- 16: schmale Randseiten von 1
- 2, 41: zweite Komponente, selbsthaftend, erstes Trägerelement
- 22: Vorderseite von 2
- 24: Rückseite von 2
- 26: schmale äußere Randseiten von 2
- 27: schmale innere Randseiten von 2
- 3, 42: dritte Komponente, zweites Trägerelement
- 32: Vorderseite von 3
- 34: Rückseite von 3
- 36: schmale Randseiten von 3
- 40: Glasträgerteil

- 50: Ausnehmung in 2 oder 3

- 60: Fortsätze auf 2
- 62: übergreifender Teil von 60
- 64: Montageelemente
- 66: elektrische Heizfolie
- 68: elektrische Anschlüsse von 66

- 70: Glasverstelleinheit
- 72: Spiegelgehäuse

- 80: Glaseinheit
- 82: Sonnenblenden-Hauptkörper
- 84: Vorderseite von 82
- 86: Rückseiten von 82
- 88: Vertiefung in 84
- 90: gefedertes Scharnier
- 92: Spiegeldeckel

- 100: Abdeckung für 102
- 102: Kameraoptik
- 104: Leiterplatte
- 106: freies Ende von 102

## Patentansprüche

1. Glaseinheit für ein indirektes Sichtsystem für ein Fahrzeug, mit
einer ersten Komponente (1) aus Glas;
einer zweiten Komponente (2) aus einem Material mit einer selbsthaftenden Eigenschaft als erstes Trägerelement (41);
und einer dritten Komponente (3) als zweites Trägerelement (42);
wobei die erste und zweite Komponente (1, 2) und die zweite und dritte Komponente (2, 3) durch die selbsthaftende Eigenschaft der zweiten Komponente (2) fest zu einer Einheit miteinander verbunden sind;
**dadurch gekennzeichnet, dass**
der E-Modul der dritten Komponente (3) größer als der E-Modul der zweiten Komponente (2) ist, und dass
die zweite Komponente (2) die erste Komponente ringförmig geschlossen oder ringförmig mit Unterbrechungen umschließt.

2. Glaseinheit nach Anspruch 1, **dadurch gekennzeichnet, dass** die dritte Komponente (3) die erste Komponente ringförmig geschlossen oder ringförmig mit Unterbrechungen umschließt.

3. Glaseinheit nach Anspruch 1 oder 2, **dadurch gekennzeichnet, dass** die drei Komponenten (1, 2, 3) zumindest teilweise formschlüssig miteinander verbunden sind.

4. Glaseinheit nach einem der vorhergehenden Ansprüche, **dadurch gekennzeichnet, dass** die zweite Komponente (2) ein Thermoplast, insbesondere ein Elastomer ist.

5. Glaseinheit nach einem der Ansprüche 1 bis 3, **dadurch gekennzeichnet, dass** die zweite Komponente (2) ein Gummi oder ein Silikon ist.

6. Glaseinheit nach einem der vorhergehenden Ansprüche, **dadurch gekennzeichnet, dass** die dritte Komponente (3) ein Thermoplast oder ein Metall ist.

7. Glaseinheit nach einem der vorhergehenden Ansprüche, **dadurch gekennzeichnet, dass** die dritte Komponente (3) aus einem härteren Material besteht als die zweite Komponente (2).

8. Glaseinheit nach einem der vorhergehenden Ansprüche, **dadurch gekennzeichnet, dass** die dritte Komponente (3) Montageelemente (64) umfasst, die angeformt sind.

9. Glaseinheit nach einem der vorhergehenden Ansprüche, **dadurch gekennzeichnet, dass** die zweite Komponente (2) als Splitterschutz für die erste Komponente (1) ausgebildet ist und diese zumindest an einer Seite (14) vollflächig überdeckt.

10. Glaseinheit nach Anspruch 9, **dadurch gekennzeichnet, dass** die zweite Komponente (2) die erste Komponente (1) zumindest abschnittsweise seitlich übergreift oder umgreift.

11. Glaseinheit nach einem der vorhergehenden Ansprüche, **dadurch gekennzeichnet, dass** die zweite Komponente (2) Fortsätze (60) aufweist, die leicht über die Vorderseite (12) der ersten Komponente (1) aus Glas hinausragen.

12. Glaseinheit nach einem der vorhergehenden Ansprüche, **dadurch gekennzeichnet, dass** die Glaseinheit mittels eines Montagespritzgussprozesses und insbesondere mittels eines 2K-Spritzgussprozesses hergestellt ist.

13. Glaseinheit nach einem der vorhergehenden Ansprüche, **dadurch gekennzeichnet**, die erste Komponente (1) ein Spiegelglas ist.

14. Glaseinheit nach einem der vorhergehenden Ansprüche 1 bis 12, **dadurch gekennzeichnet**, die erste Komponente (1) eine optische Linse ist.

15. Glaseinheit nach einem der vorhergehenden Ansprüche 1 bis 12, **dadurch gekennzeichnet**, die erste Komponente (1) ein Abdeckglas für eine optische Einrichtung, insbesondere für eine Kamera ist.

## Claims

1. Glass unit for an indirect vision system for a vehicle, with a first glass component (1);
a second component (2) of a material having a self-adhesive property as a first support element (41);
and a third component (3) as a second support element (42);
wherein the first and the second component (1, 2) and the second and the third component (2, 3) are bonded together securely into single unit by the self-adhesive property of the second component (2);
**characterized in that** the modulus of elasticity of the third component (3) is greater than the modulus of elasticity of the second component (2), and that the second component (2) encloses the first component in a closed annular manner or in an annular manner with interruptions.

2. Glass unit according to claim 1 **characterized in that** the third component (3) encloses the first component in a closed annular manner or in an annular manner with interruptions.

3. Glass unit according to claim 1 or 2 **characterized in that** the three components (1, 2, 3) are at least partially interlockingly connected to each other.

4. Glass unit in accordance with one of the preceding claims **characterized in that** the second component (2) is a thermoplastic, more particularly an elastomer.

5. Glass unit in accordance with one of the claims 1 to 3 **characterized in that** the second component (2) is a rubber or a silicone.

6. Glass unit in accordance with one of the preceding claims **characterized in that** the third component (3) is a thermoplastic or a metal.

7. Glass unit in accordance with one of the preceding claims **characterized in that** the third component (3) made from a harder metal than the second component (2).

8. Glass unit in accordance with one of the preceding claims **characterized in that** the third component (3) comprises mounting elements (64) that are moulded on.

9. Glass unit in accordance with one of the preceding claims **characterized in that** the second component (2) is designed as splinter protection for the first component (1) and covers the same over the full area on at least one side (14).

10. Glass unit according to claim 9 **characterized in that** the second component (2) embraces or overlaps the first component (1) at the sides, at least in sections.

11. Glass unit in accordance with one of the preceding claims **characterized in that** the second component (2) has glass projections (60) which project slightly beyond the front (12) of the first component (1).

12. Glass unit in accordance with one of the preceding claims **characterized in that** the glass unit is produced by an assembly injection moulding process, and more particularly by means of a two-component injection moulding process.

13. Glass unit in accordance with one of the preceding claims **characterized in that** the first component (1) is a mirrored glass.

14. Glass unit in accordance with one of the preceding claims 1 to 12 **characterized in that** the first component (1) is an optical lens.

15. Glass unit in accordance with one of the preceding claims 1 to 12 **characterized in that** the first component (1) is a cover glass for an optical device, more particularly for a camera.

## Revendications

1. Unité de verre pour un système de couche indirect pour un véhicule, avec un premier composant (1) en verre ;
un deuxième composant (2) en matériau avec une propriété autocollante en tant que premier élément porteur (41) ;
et un troisième composant (3) en tant que deuxième élément porteur (42) ;
les premier et deuxième composants (1, 2) et les deuxième et troisième composants (2, 3) étant fermement reliés entre eux en une unité grâce à la propriété autocollante du deuxième composant (2) ;
**caractérisé en ce que**
le module d'élasticité du troisième composant (3) est supérieur au module d'élasticité du deuxième composant (2) et **en ce que**
le deuxième composant (2) entoure le premier composant de manière annulaire fermée ou de manière annulaire avec des interruptions.

2. Unité de verre selon la revendication 1, **caractérisée en ce que** le troisième composant (3) entoure le premier composant de manière annulaire fermée ou de manière annulaire avec des interruptions.

3. Unité de verre selon la revendication 1 ou 2, **caractérisée en ce que** les trois composants (1, 2, 3) sont reliés entre eux au moins partiellement par complémentarité de forme.

4. Unité de verre selon l'une des revendications précédentes, **caractérisée en ce que** le deuxième composant (2) est un thermoplastique, plus particulièrement un élastomère.

5. Unité de verre selon l'une des revendications 1 à 3, **caractérisée en ce que** le deuxième composant (2) est un caoutchouc ou un silicone.

6. Unité de verre selon l'une des revendications précédentes, **caractérisée en ce que** le troisième composant (3) est un thermoplastique ou un métal.

7. Unité de verre selon l'une des revendications précédentes, **caractérisée en ce que** le troisième composant (3) est constitué d'un matériau plus dur que le deuxième composant (2).

8. Unité de verre selon l'une des revendications précédentes, **caractérisée en ce que** le troisième composant (3) comprend des éléments de montage (64) qui sont moulés.

9. Unité de verre selon l'une des revendications précédentes, **caractérisée en ce que** le deuxième composant (2) est conçu comme une protection anti-éclats pour le premier composant (1) et celle-ci est recouverte sur toute sa surface sur au moins un côté (14).

10. Unité de verre selon la revendication 9, **caractérisée en ce que** le deuxième composant (2) englobe ou entoure le premier composant (1) latéralement au moins à certains endroits.

11. Unité de verre selon l'une des revendications précédentes, **caractérisée en ce que** le deuxième composant (2) comprend des prolongements (60) qui dépassent légèrement du côté avant (12) du premier composant (1) en verre.

12. Unité de verre selon l'une des revendications précédentes, **caractérisée en ce que** l'unité de verre est fabriquée au moyen d'un processus de montage à moulage par injection et plus particulièrement d'un processus de moulage par injection 2K.

13. Unité de verre selon l'une des revendications précédentes, **caractérisée en ce que** le premier composant (1) est un verre de miroir.

14. Unité de verre selon l'une des revendications 1 à 12, **caractérisée en ce que** le premier composant (1) est une lentille optique.

15. Unité de verre selon l'une des revendications 1 à 12, **caractérisée en ce que** le premier composant (1) est un verre de protection pour un dispositif optique, plus particulièrement pour une caméra.
